# EUROPÄISCHE PATENTSCHRIFT

(11) **EP 0 401 640 B1**
(45) Veröffentlichungstag und Bekanntmachung des Hinweises auf die Patenterteilung: **27.10.1993**
(21) Anmeldenummer: 90110101.4
(22) Anmeldetag: 28.05.1990
(51) Int. Cl.: H01R 15/00, H01R 13/11

(54) **Wassergekühlte Hochstrom-Andocksteckverbindungsvorrichtung**
Water-cooled high-tension electrical connector
Dispositif de connection électrique refroidi par eau, pour courant fort

(30) Priorität: 09.06.1989 DE 3918950
(43) Veröffentlichungstag der Anmeldung: 12.12.1990
(73) Patentinhaber: OTTO DUNKEL GMBH FABRIK FÜR ELEKTROTECHNISCHE GERÄTE, 84453 Mühldorf (DE)
(72) Erfinder: Neumann, Gerhard, D-8264 Waldkraiburg (DE); Molitor, Paul-Rainer, D-8260 Mühldorf (DE)
(74) Vertreter: Patentanwälte Leinweber & Zimmermann

(56) Entgegenhaltungen:
- DE-B- 2 318 690
- US-A- 4 714 441
- US-A- 4 772 233

## Beschreibung

Die Erfindung bezieht sich auf eine wassergekühlte Hochstrom-Andocksteckverbindungsvorrichtung, insbesondere für automatisierte Schweißanlagen, mit einem Steckbuchsenteil und einem in dieses eingreifenden Steckerstiftteil, die ggf. relativ zueinander drehbar sind.

Steckverbindungsvorrichtungen dieser Art, wie sie insbesondere im Karosseriebau der Automobilindustrie eingesetzt werden, sollen wenig Platz in Anspruch nehmen. Sie müssen die Forderungen nach hoher Verfügbarkeit erfüllen d. h. sie müssen hohe Steckzyklenzahlen ermöglichen und eine schnelle Reparaturmöglichkeit gewährleisten. Zur Erzielung hoher Steckzyklenzahlen durfen die bei den Steck- und Ziehbewegungen auf tretenden Reibkräfte der Kontaktelemente die Kontaktoberfläche nicht übermäßig beanspruchen. Die Steckt- und Ziehkräfte, die sich über die gesamte Stiftoberfläche verteilen, dürfen also nicht zu hohe werte annehmen, wenn nicht eine Verringerung der Steckhäufigkeit in Kauf genommen werden soll. Zu berücksichtigen ist andererseits, daß bei den in der Praxis gegebenen hohen Stromstärken während nur kurzer Einschaltzeiten federnde Kontaktelemente an den Berührungsstellen mit dem Kontaktstift extrem beansprucht werden, insbesondere wenn es bei zu labiler Ausführung der federnden Kontaktelemente zu Kontaktflächenabhebungen hochfrequenten Stromstößen kommt, was zu einer hohen Erwärmung und damit zu einem Ausfall der Steckverbindungsvorrichtung mit federnden Kontaktelementen führt.

Aus den genannten Gründen sind die herkömmlichen Steckverbindungsvorrichtungen, auch wenn sie zur Erzielung einer besonders hohen Belastbarkeit mit einer Wasserkühlung ausgerüstet sind, nicht geeignet, die genannten Aufgaben zu erfüllen. Entweder sind die Steckt und Ziehkräfte, die sich über die gesamte Kontaktstiftoberfläche verteilen, zu hoch, was die mögliche Steckhäufigkeit beeinflußt, oder die Kontaktelemente sind für die hohe Belastung zu labil und heben sich bei den auftretenden Stromstößen vom Kontaktstift ab, was wiederum zu einer hohen Erwärmung und damit zum Ausfall der Steckverbindungen führt.

Überdies können herkömmliche Steckverbindungen bei wassergekühlten Anlagen nicht in Stand gesetzt werden, ohne das ganze System - die Strom- und Wasserverbindung - zu trennen und damit lange Standzeiten erforderlich zu machen.

Aus diesen genannten Gründen ist man in Schweißzangenwechselsystemen (Andockeinrichtungen) dazu übergegangen, im Regelfall den Schweißtrafo nach den Steckverbindungsvorrichtungen anzuordnen, um über die Steckverbindungsvorrichtungen die relativ niedrigen Primärströme bei entsprechend hohen Spannungen zu übertragen. Hierbei müssen jedoch von den Robotersystemen die Schweißtrafos an den Roboterarmen mitbewegt werden.

Neben den hohen Gewichten und den daraus resultierenden Beanspruchungen der Roboter ist diese Problemlösung außerdem sehr kapitalintensiv, da jede Schweißzange mit einem Trafo ausgestattet sein muß.

Der Erfindung liegt die Aufgabe zugrunde, die Andocksteckverbindungsvorrichtung der eingangs genannten Art auf einfache Weise so auszugestalten, daß hohe Ströme bei niedrigen Spannungen ohne die Gefahr des Abhebens der federnden Kontaktelemente übertragbar sind, so daß der Schweißtrafo ohne Funktionsbeeinträchtigung vor den Steckverbindungsvorrichtungen angeordnet werden kann.

Die Hochstrom-Andocksteckverbindungsvorrichtung nach der Erfindung, bei der diese Aufgabe gelöst ist, zeichnet sich dadurch aus, daß im Steckbuchsenteil axial hintereinander mehrere federnde Kontaktringgruppen angeordnet sind, von denen jede mindestens einen geschlitzten Buchsen-Außenkontaktring mit einer an der Innenfläche des Steckbuchsenteils elastisch anliegenden Kontaktfläche sowie mindestens einen geschlitzten Buchsen-Innenkontaktring mit einer in gestecktem Zustand am Steckerstiftteil elastisch anliegenden Kontaktfläche umfaßt und daß der Buchsen-Außenkontaktring und der Buchsen-Innenkontaktring jeder Kontaktringgruppe aufeinander abgestimmte Kegelkontaktflächen aufweisen. Durch diese Mehrzahl von Kontaktringgruppen, die der parallelen Stromübertragung dienen, ist sichergestellt, daß die hohen Sekundärströme, die zum Schweißen notwendig sind, sicher übertragen werden können. Zu diesem Zweck bedarf es auch keiner überhöhten Kontaktkräfte, die eine unzulässig hohe Kontaktflächenbeanspruchung zur Folge hätten. Die Steck- und Ziehkräfte können, ohne bei Stromstößen Kontaktabhebungen befürchten zu müssen, dementsprechend niedrig gehalten werden.

Als sehr vorteilhaft im Hinblick auf die Erzielung vorbestimmter Kontaktkräfte zwischen den Kontaktringen jeder Kontaktringgruppe hat es sich herausgestellt, wenn den im Buchsenteil angeordneten Kontaktringgruppen mindestens ein Federelement zugeordnet ist, das die Kontaktringe jeder Gruppe in gestecktem Zustand zusätzlich kraftschlüssig über ihre Kegelkontaktflächen beaufschlagt.

Dabei hat es sich zur Erzielung einer auf einfache Weise verwirklichten Lagesicherung der Kontaktringgruppen sehr günstig erwiesen, wenn im Steckbuchsenteil eine die axiale Verschiebbarkeit der Kontaktringgruppen begrenzende, durch eine Durchmesserreduzierung gebildete Buchsenschulter vorgesehen ist.

Für wassergekühlte Hochstrom-Andocksteckverbindungsvorrichtungen, die im Einsatz gedreht werden, hat sich der Einsatz von übereinstimmend ausgebildeten Innen-Kontaktringen als zweckmäßig herausgestellt, die an dem zylindrisch geformten Steckerstiftteil zur Anlage gelangen.

Bei Hochstrom-Andocksteckverbindungsvorrichtungen für extrem hohe Steckhäufigkeiten ist es günstig, wenn dem Stekkerstiftteil Kontaktringgruppen mit einer Folge von Innen-Kontaktringen mit unterschiedlichen Innendurchmessern zugeordnet sind, die jeweils auf den Außendurchmesser der zugehörigen Stufe des abgesetzten Steckerstiftteils abgestimmt sind. Sind n Stufen und dementsprechend n Kontaktringgruppen vorhanden, dann wird jedes Steckerstiftteil beim Einschieben bzw. Herausziehen auch nur auf 1/n seiner Oberfläche reibend belastet. Dies begünstigt somit die angestrebte Möglichkeit, auf relativ einfache Weise eine hohe Steckhäufigkeit zu erreichen.

An dieser Stelle ist zu betonen, daß die Kontaktelemente vor Ort ohne Ausbau, d. h. ohne mechanische Trennung der Steckverbindung von den Andockvorrichtungen, sowie den Strom- und ggf. Wasserverbindungen auf einfache Weise und dementsprechend schnell vorgenommen werden können. Um die Einsatzzeit bei einem etwaigen Verschleiß der Steckvorrichtung weiter zu erhöhen, kann z. B. durch Einbau von Innen-Kontaktringen mit verringertem Nenndurchmesser leicht eine Anpassung an das u. U. verschleißbehaftete StiftIeil herbeigeführt werden.

Von Vorteil ist auch die Tatsache, daß die erfindungsgemäße Steckverbindungsvorrichtung durch Austausch der Kontaktringe einfach an jede vorkommende Einsatzbedingung angepaßt werden kann.

Weitere Einzelheiten, Vorteile und Merkmale der Erfindung ergeben sich aus der folgenden Beschreibung anhand der Zeichnung, auf die bezüglich aller nicht im Text beschriebenen Einzelheiten ausdrücklich verwiesen wird. Es zeigen
- Fig. 1: einen Axialschnitt durch eine Steckverbindungsvorrichtung mit zylindrischem Stekkerstiftteil,
- Fig. 2: einen Axialschnitt durch eine Steckverbindungsvorrichtung mit stufenförmig abgesetztem Steckerstiftteil,
- Fig. 3: einen Axialschnitt durch eine Steckverbindungsvorrichtung mit kegelstumpfförmigem Steckerstiftteil,
- Fig. 4: einen Axialschnitt durch eine abgewandelte Ausführungsform ähnlich derjenigen der Fig. 3,
- Fig. 5: einen Axialschnitt durch eine weitere abgewandelte Ausführungsform ähnlich derjenigen der Fig. 3,
- Fig. 6 u. 8: jeweils einen Axialschnitt der gleichen Ausführungsform, jedoch in unterschiedlichen Kupplungsphasen,
- Fig. 7: einen Radialschnitt durch die Steckverbindungsvorrichtung entsprechend der Linie VII-VII der Fig. 8,
- Fig. 9: einen Axialschnitt durch eine weitere abgewandelte Ausführungsform,
- Fig. 10: einen Axialschnitt durch eine weitere abgewandelte Ausführungsform,
- Fig.11 u. 12: einen Axialschnitt bzw. eine Ansicht eines Buchsen-Außenkontaktringes,
- Fig.13 u. 14: einen Axialschnitt bzw. eine Ansicht eines Buchsen-Innenkontaktringes,
- Fig.15 u. 16: einen Axialschnitt bzw. eine Ansicht eines Federrings, wie in Fig. 1 und Fig. 9 gezeigt,
- Fig.17 u. 18: eine Ansicht und einen Schnitt durch einen abgewandelten Buchsen-Kontaktring, wie in Fig. 5 und Fig. 10 gezeigt.
- Fig. 19: einen schematischen Axialschnitt durch einen gewellten Federring, wie in Fig. 4 gezeigt.

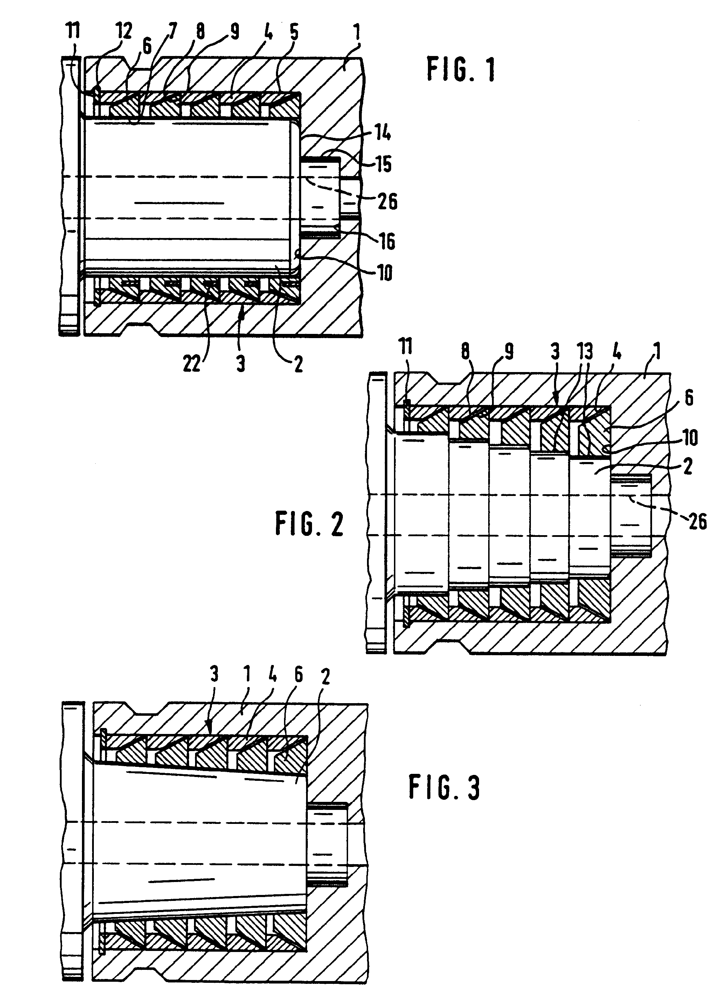

Wie aus der Zeichnung ersichtlich, umfaßt die veranschaulichte Hochstrom-Andocksteckverbindungsvorrichtung ein Steckbuchsenteil 1 und ein in dieses eingreifendes Steckerstiftteil 2. Die Ausführung nach Fig. 1, bei der der Steckerstiftteil 2 zylindrisch geformt ist, wird in der Praxis bevorzugt eingesetzt, wenn eine Relativverdrehung möglich sein soll. Im Steckbuchsenteil 1 sind axial hintereinander mehrere Kontaktringgruppen 3 angeordnet. Bei den in den Fig. 1 bis 3 veranschaulichten Ausführungsformen umfaßt jede Kontaktringgruppe 3 einen geschlitzten Buchsen-Außenkontaktring 4 mit einer an der Innenfläche des Steckbuchsenteils 1 elastisch anliegenden Kontaktfläche 5 sowie einen geschlitzten Buchsen-Innenkontaktring 6 mit einer in gestecktem Zustand am Steckerstiftteil 2 elastisch anliegenden Kontaktfläche 7. Bei jeder Ausführungsform sind der Buchsen-Innenkontaktring 6 und der Buchsen-Außenkontaktring 4 jeder Kontaktringgruppe 3 mit aufeinander abgestimmten Kegelkontaktflächen 8 bzw. 9 versehen. Ebenso weisen sämtliche veranschaulichten Ausführungsformen im Steckbuchsenteil 1 eine die axiale Verschiebbarkeit der Kontaktringgruppen 3 begrenzende, durch eine Durchmesserreduzierung gebildete Buchsenschulter 10 auf. Zur Lagesicherung der Kontaktringgruppen im Steckbuchsenteil 1 ist mindestens ein Sprengring 11 vorgesehen, der in einer Ringnut 12 des Steckbuchsenteils 1 festgelegt ist.

Abweichend von der Ausführung nach Fig. 1, bei der im Einsatz eine relative Drehung des Steckerstiftteils 2 in bezug auf den Steckbuchsenteil 1 stattfinden kann, und bei der übereinstimmend ausgebildete Buchsen-Innenkontaktringe 6 Anwendung finden, die an dem zylindrisch geformten Steckerstiftteil 2 zur Anlage gelangen, weisen die Ausführungen nach den Fig. 2, 3, 4 und 5 von der zylindrischen Form abweichende Formen für den Steckerstiftteil 2 auf. Für den Einsatz bei hohen Steckhaufigkeiten ist die Steckverbindungsvorrichtung nach Fig. 2 mit einem Steckerstiftteil 2 ausgerüstet, dem Kontaktringgruppen 3 mit einer Folge von Buchsen-Innenkontaktringen 6 mit unterschiedlichen Innendurchmessern zugeordnet sind. Diese sind jeweils auf den Außendurchmesser der zugehörigen Stufe 13 des stufenförmig abgesetzten Steckerstiftteils 2 abgestimmt. Für den Einsatz mit hoher Steckhäufigkeit kann gemäß Fig. 3 auch eine Steckverbindungsvorrichtung mit Steckerstiftteilen Anwendung finden, die kegelstumpfförmig ausgebildet sind. Dem Steckerstiftteil 2 ist hier eine Folge von Buchsen-Innenkontaktringen 6 mit unterschiedlichen Innendurchmessern zugeordnet, die auf den kegeligen Außendurchmesser des Stiftteiles abgestimmt sind.

Wie aus der Zeichnung ersichtlich, umfaßt der Steckerstiftteil 2 sämtlicher Ausführungsformen einen über seinen Kontaktflächenbereich 14 vorstehenden zylindrischen Führungsbereich 15. Dieser Bereich symbolisiert den Einbauraum für tropffreie Wassersteckverbindungen.

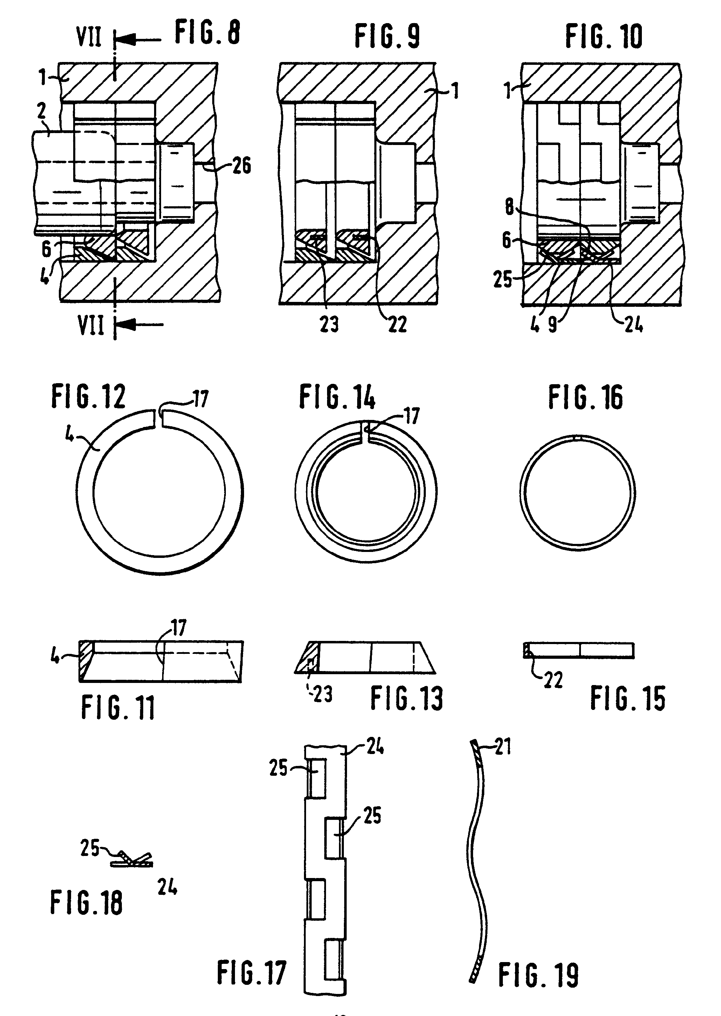

Aus den Fig. 1, 2 und 3 in Verbindung mit den Fig. 11 und 12 ergibt sich, daß der Buchsen-Außenkontaktring 4 normalerweise als massives Drehteil ausgebildet ist, der für die elastische Anlage an der Innenfläche des Steckbuchsenteils 1 mit einem Schlitz 17 versehen ist.

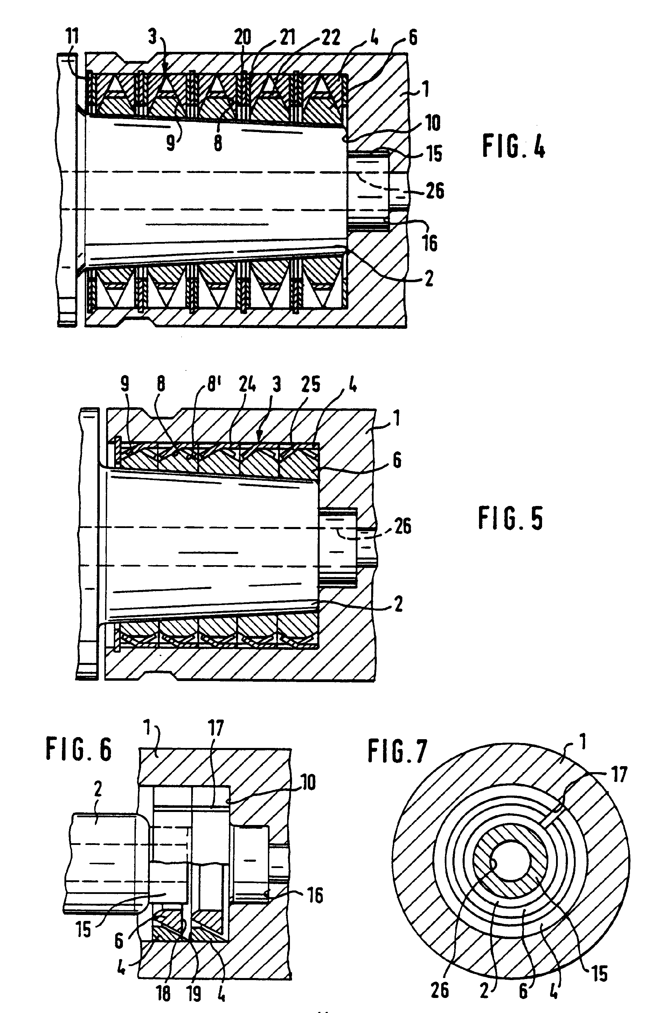

Aus den Fig. 6 bis 8 geht hervor, in welcher Weise es zur Kontaktgabe des Steckerstiftteils 2 mit dem Steckbuchsenteil 1 bei dessen Einführung in die zwischengeschalteten Kontaktringe 4,6 jeder Kontaktringgruppe 3 kommt. Wie aus Fig. 6 entnehmbar, befinden sich die Buchsen-Innenkontaktringe 6 zunächst in vom Buchsen-Außenkontaktring 4 abgehobenem Zustand. Bei Einführung des Steckerstiftteils 2 in den Buchsen-Innenkontaktring 6 wird dieser bis zum Anschlag seiner äußeren Stirnfläche 18 an der ihr zugewandten Gegenfläche 19 des Buchsen-Außenkontaktrings 4 mitgeführt und anschließend aufgeweitet, bis das in den Fig. 1, 2 und 3 übertrieben dargestellte Spiel zwischen den Kegelkontaktflächen 8 und 9 praktisch aufgehoben ist. Der Strom kann dann vom Steckerstiftteil 2 über den Buchsen-Innenkontaktring 6 und die Stirnfläche 18 sowie Gegenfläche 19 zum Buchsen-Außenkontaktring 4 und damit zum Steckbuchsenteil 1 fließen, ggf. noch zusätzlich über die Kegelkontaktflächen 8 und 9 zum benachbarten Buchsen-Außenkontaktring 4 und von diesem zum Steckbuchsenteil 1. In vollständig eingeschobenem Zustand des Steckerstiftteils 2 in bezug auf das Steckbuchsenteil 1 vervielfacht sich die Anzahl der Stromübergangsbereiche entsprechend der Anzahl der vorgesehenen Kontaktringgruppen 3.

In Fig. 4 ist eine Ausführung veranschaulicht, bei der jedem Buchsen-Innenkontaktring 6 zwei Buchsen-Außenkontaktringe 4 zugeordnet sind. Jede Kontaktringgruppe 3 besteht bei dieser Ausführung somit aus einem Buchsen-Innenkontaktring 6 und zwei Buchsen-Außenkontaktringen 4. Die einzelnen Kontaktringgruppen 3 sind in ihrer Lage innerhalb des Steckbuchsenteils 1 durch Sprengringe 20 festgelegt, die in entsprechende Ringnuten im Steckbuchsenteil 1 eingreifen. Die Kontaktringe jeder Kontaktringgruppe 3 werden durch zwei gewellte Federringe 21, die sich an den benachbarten Sprengringen 20 bzw. 11 bzw. der Buchsenschulter 10 abstützen in gegenseitiger Anlage und damit in Anlage an der Außenfläche des Steckerstiftteils 2 bzw. der Innenfläche des Steckbuchsenteils 1 gehalten. Aus Fig. 4 geht hervor, daß jeder Buchsen-Innenkontaktring 6 zwei Kegelkontaktflächen 8 aufweist, an denen die entsprechenden Kegelkontaktflächen 9 der Buchsen-Außenkontaktringe 4 zur Anlage gelangen.

Um die Kraft, mit der der Buchsen-Innenkontaktring 6 an der Außenfläche des Steckerstiftteils 2 anliegt, zu erhöhen, ist bei der Ausführung nach Fig. 4 jedem Buchsen-Innenkontaktring 6 ein ihn zur Oberfläche des Steckerstiftteils 2 hin radial beaufschlagender Federring 22 zugeordnet. Im Falle der Ausführung nach Fig. 4 liegt der Federring 22 an der Außenseite des Buchsen-Innenkontaktrings 6 an.

Fig. 9 zeigt eine Ausführungsform, bei der der Buchsen-Innenkontaktring 6 eine zur Seite hin offene achsparallele Nut 23 zur Aufnahme des Federrings 22 aufweist.

In den Fig. 5 und 10 ist eine abgewandelte Ausführung veranschaulicht, bei der der Buchsen-Außenkontaktring 4 der Kontaktringgruppen 3 jeweils aus einem Blechstreifen 24, wie er in den Fig. 17 und 18 näher veranschaulicht ist, gebildet ist, und zwar durch Ausstanzen von zum Streifenrand hin gerichteten Zungen 25. Diese Zungen 25 bilden die Kegelkontaktfläche 9, an der der Buchsen-Innenkontaktring 6 mit seiner entsprechenden Kegelkontaktfläche 8 federnd zur Anlage gelangt. Die Zungen 25 sind jeweils abwechselnd zu den beiden Seiten des Streifenrands hin ausgestanzt und abgewinkelt. Der Buchsen-Innenkontaktring 6 umfaßt dementsprechend jeweils zwei Kegelkontaktflächen 8,8', an denen sich die abgewinkelten Zungen 25 federnd abstützen.

Bei sämtlichen Ausführungsformen weist sowohl das Steckbuchsenteil 1 als auch das Steckerstiftteil 2 jeweils eine zentrale Bohrung 26 auf, über die nach Herstellung der Steckverbindung Kühlwasser für die Ableitung der im Bereich von Schweißzangen oder dgl. entstehenden Wärme geleitet werden kann. Die Abdichtung wird durch im Führungsbereich 15 vorgesehene, an sich bekannte und in der Zeichnung nicht veranschaulichte Dichtungsmittel gewährleistet.

## Patentansprüche

1. Wassergekühlte Hochstrom-Andocksteckverbindungsvorrichtung, insbesondere für automatisierte Schweißanlagen, mit einem Steckbuchsenteil (1) und einem in dieses eingreifenden Steckerstiftteil (2), die ggf. relativ zueinander drehbar sind, dadurch gekennzeichnet, daß im Steckbuchsenteil (1) axial hintereinander mehrere Kontaktringgruppen (3) angeordnet sind, von denen jede mindestens einen geschlitzten Buchsen-Außenkontaktring (4) mit einer an der Innenfläche des Steckbuchsenteils (1) elastisch anliegenden Kontaktfläche (5) sowie mindestens einen geschlitzten Buchsen-Innenkontaktring (6) mit einer in gestecktem Zustand am Steckerstiftteil (2) elastisch anliegenden Kontaktfläche (7) umfaßt und daß der Buchsen-Außenkontaktring (4) und der Buchsen-Innenkontaktring (6) jeder Kontaktringgruppe (3) aufeinander abgestimmte Kegelkontaktflächen (8,8';9) aufweisen.

2. Steckverbindungsvorrichtung nach Anspruch 1, dadurch gekennzeichnet, daß den im Steckbuchsenteil (1) angeordneten Kontaktringgruppen (3) mindestens ein Federelement (21) zugeordnet ist, das die Kontaktringe (4,6) jeder Gruppe (3) in gestecktem Zustand im Sinne einer elastischen Anlage ihrer Kegelkontaktflächen (8,8';9) beaufschlagt.

3. Steckverbindungsvorrichtung nach Anspruch 1 oder 2, dadurch gekennzeichnet, daß im Steckbuchsenteil (1) eine die axiale Verschiebbarkeit der Kontaktringgruppen (3) begrenzende, durch eine Durchmesserreduzierung gebildete Buchsenschulter (10) vorgesehen ist.

4. Steckverbindungsvorrichtung nach einem der Ansprüche 1 bis 3, bei der im Einsatz eine relative Drehung des Steckerstiftteils (2) in bezug auf das Steckbuchsenteil (1) stattfindet, dadurch gekennzeichnet, daß übereinstimmend ausgebildete Buchsen-Innenkontaktringe (6) Anwendung finden, die an dem zylindrisch geformten Steckerstiftteil (2) zur Anlage gelangen, (Fig. 1).

5. Steckverbindungsvorrichtung nach einem der Ansprüche 1 bis 3, für den Einsatz bei hohen Steckhäufigkeiten, dadurch gekennzeichnet, daß dem Steckerstiftteil (2) Kontaktringgruppen (3) mit einer Folge von Buchsen-Innenkontaktringen (6) mit unterschiedlichen Innendurchmessern zugeordnet sind, die jeweils auf den Außendurchmesser der zugehörigen Stufe (13) des stufenförmig abgesetzten Steckerstiftteils (2) abgestimmt sind, (Fig. 2).

6. Steckverbindungsvorrichtung nach einem der Ansprüche 1 bis 3, für den Einsatz mit hoher Steckhäufigkeit mit niedrigsten Steckkräften, dadurch gekennzeichnet, daß dem kegelstumpfförmig ausgebildeten Steckerstiftteil (2) eine Folge von Buchsen-Innenkontaktringen (6) mit unterschiedlichen Innendurchmessern zugeordnet ist, die auf den kegeligen Außendurchmesser des Stiftteiles abgestimmt sind (Fig. 3).

7. Steckverbindungsvorrichtung nach einem der Ansprüche 3 bis 6, dadurch gekennzeichnet, daß der Steckerstiftteil (2) einen über seinen Kontaktflächenbereich vorstehenden zylindrischen Fuhrungsbereich (15) umfaßt, der auf eine sich an die Buchsenschulter (10) anschließende entsprechende Ausnehmung (16) im Steckbuchsenteil abgestimmt ist.

8. Steckverbindungsvorrichtung nach einem der Ansprüche 1 bis 7, dadurch gekennzeichnet, daß zur Lagesicherung der Kontaktringgruppen (3) im Steckbuchsenteil (1) mindestens ein Sprengring (11) vorgesehen ist, der in einer Ringnut (12) des Steckbuchsenteils (1) festgelegt ist.

9. Steckverbindungsvorrichtung nach einem der Ansprüche 1 bis 8, dadurch gekennzeichnet, daß der Buchsen-Außenkontaktring (4) der Kontaktringgruppen (3) jeweils aus einem Blechstreifen (24) mit zum Streifenrand gerichteten herausgestanzten Zungen (25) gebildet ist, die aus der Kontaktringebene leicht abgewinkelt herausgebogen sind und an denen sich der Buchsen-Innenkontaktring (6) mit seinen entsprechenden Kegelkontaktflächen (8,8') abstützt.

10. Steckverbindungsvorrichtung nach Anspruch 9, dadurch gekennzeichnet, daß die Zungen (25) jeweils abwechselnd zu den beiden Seiten des Streifenrands hin ausgestanzt und abgewinkelt sind, daß der Buchsen-Innenkontaktring (6) jeweils zwei Kegelkontaktflächen (8,8') umfaßt und daß sich die abgewinkelten Zungen (25) an den beiden Kegelkontaktflächen (8,8') des Buchsen-Innenkontaktrings (6) federnd abstützen.

11. Steckverbindungsvorrichtung nach einem der Ansprüche 1 bis 10, dadurch gekennzeichnet, daß jede Kontaktringgruppe (3) einen geschlitzten Buchsen-Innenkontaktring (6) und zwei geschlitzte Buchsen-Außenkontaktringe (4) umfaßt, die über ihre Kegelkontaktflächen (9) an entsprechenden Kegelflächen (8) des Buchsen-Innenkontaktrings (6) anliegen.

12. Steckverbindungsvorrichtung nach Anspruch 11, daß durch gekennzeichnet, daß jeder Kontaktringgruppe (3) mindestens eine sie axial beaufschlagende und mit ihren Kegelkontaktflächen (8,9) in gegenseitiger Anlage haltende Feder (21) zugeordnet ist.

13. Steckverbindungsvorrichtung nach Anspruch 12, dadurch gekennzeichnet, daß die Feder durch einen gewellten Federring (21) gebildet ist.

14. Steckverbindungsvorrichtung nach Anspruch 13, dadurch gekennzeichnet, daß die Ringe jeder Kontaktringgruppe (3) unter Einschaltung der Feder (21) jeweils zwischen zwei Sprengringen (20) festgelegt sind, die ihrerseits im Steckbuchsenteil (1) durch Eingreifen in eine ihnen zugeordnete Ringnut in ihrer Lage fixiert sind.

15. Steckverbindungsvorrichtung nach Ansprüch 14, dadurch gekennzeichnet, daß zwischen zwei aufeinanderfolgenden Sprengringen (20) jeweils zwei gewellte Federringe (21) eingeschaltet sind, die die zwischen ihnen angeordneten Ringe (4,6) der zugehörigen Kontaktringgruppe (3) in gegenseitiger Anlage und über die Kegelkontaktfläche (8,9) in Anlage am Steckerstiftteil (2) halten.

16. Steckverbindungsvorrichtung nach einem der vorstehenden Ansprüche, dadurch gekennzeichnet, daß jedem Buchsen-Innenkontaktring (6) ein ihn zur Oberfläche des Steckerstiftteils (2) hin radial beaufschlagender Federring (22) zugeordnet ist.

17. Steckverbindungsvorrichtung nach Anspruch 16, dadurch gekennzeichnet, daß der Federring (22) an der Außenseite des Buchsen-Innenkontaktrings (6) anliegt, (Fig. 4).

18. Steckverbindungsvorrichtung nach Anspruch 16, dadurch gekennzeichnet, daß der Buchsen-Innenkontaktring (6) eine zur Seite offene achsparallele Nut (23) zur Aufnahme des Federrings (22) aufweist, (Fig. 9).

## Claims

1. A water-cooled high-current docking plug-in connection device, particularly for automated welding installations, with a plug-in socket part (1) and a plug-in pin part (2) engaging in the latter, which can optionally be rotated in relation to each other, characterised in that a plurality of contact ring groups (3) is disposed axially with the groups one behind another in the plug-in socket part (1), each of which contact ring groups comprises at least one slit socket outer contact ring (4) with a contact face (5) seated resiliently against the inner face of the plug-in socket part (1), and at least one slit socket inner contact ring (6) with a contact face (7) seated resiliently against the plug-in pin part (2) in the plugged-in state, and that the socket outer contact ring (4) and the socket inner contact ring (6) have tapered contact faces (8, 8'; 9) which are matched to each other.

2. A plug-in connection device according to claim 1, characterised in that at least one spring element (21) is associated with the contact ring groups (3) disposed in the plug-in socket part (1), which spring element in the plugged-in state acts on the contact rings (4, 6) of each group (3) in the direction of a resilient contact between their tapered contact faces (8, 8'; 9).

3. A plug-in connection device according to claim 1 or 2, characterised in that a socket shoulder (10), which restricts the axial movement of the contact ring groups (3) and which is formed by a reduction in diameter, is provided in the plug-in socket part (1).

4. A plug-in connection device according to any one of claims 1 to 3, in which a relative rotation of the plug-in pin part (2) with respect to the plug-in socket part (1) takes place in use, characterised in that socket inner contact rings (6) of matching construction are employed, which come into contact with the cylindrically shaped plug-in pin part (2) (Figure 1).

5. A plug-in connection device according to any one of claims 1 to 3, for use at greater plug-in frequencies, characterised in that contact ring groups (3) with a series of socket inner contact rings (6) with different internal diameters are associated with the plug-in pin part (2), each of which contact ring groups is matched to the external diameter of the associated step (13) of the plug-in pin part (2) of stepped construction (Figure 2).

6. A plug-in connection device according to any one of claims 1 to 3,, for use at greater plug-in frequencies and the lowest insertion forces, characterised in that a series of socket inner contact rings (6) with different internal diameters is associated with the plug-in pin part (2) of tapered construction, which socket inner contact rings are matched to the tapered external diameter of the pin part (Figure 3).

7. A plug-in connection device according to any one of claims 3 to 6, characterised in that the plug-in pin part (2) comprises a cylindrical guide region (15) projecting beyond its contact face region, which guide region is matched to a corresponding recess (16) adjoining the socket shoulder (10) in the plug-in socket part.

8. A plug-in connection device according to any one of claims 1 to 7, characterised in that at least one retaining ring (11) is provided, which is secured in an annular groove (12) in the plug-in socket part (1), for securing the position of the contact ring groups (3) in the plug-in socket part (1).

9. A plug-in connection device according to any one of claims 1 to 8, characterised in that each socket outer contact ring (4) of the contact ring groups (3) is formed from a metal strip (24) with punched-out tongues (25) directed towards the edge of the strip, which tongues are bent at a slight angle out of the plane of the contact ring and on which tongues the socket inner contact ring (6) is supported at its corresponding tapered contact faces (8, 8').

10. A plug-in connection device according to claim 9, characterised in that the tongues (25) are in each case punched out and angled alternately towards the two sides of the strip edge, that each socket inner contact ring (6) comprises two tapered contact faces (8, 8'), and that the angled tongues 25) are resiliently supported on the two tapered contact faces (8, 8') of the socket inner contact ring (6).

11. A plug-in connection device according to any one of claims 1 to 10, characterised in that each contact ring group (3) comprises one slit socket inner contact ring (6) and two slit socket outer contact rings (4), which are seated against corresponding tapered faces (8) of the socket inner contact ring (6) via their tapered contact faces (9).

12. A plug-in connection device according to claim 11, characterised in that at least one spring (21) is associated with each contact ring group (3), which spring acts upon the contact ring group axially and holds its tapered contact faces (8, 9) in mutual contact.

13. A plug-in connection device according to claim 12, characterised in that the spring is formed by a corrugated spring ring (21).

14. A plug-in connection device according to claim 13, characterised in that the rings of each contact ring group (3) are secured in each case, with the insertion of the spring (21), between two retaining rings (20) which in turn are fixed in the plug-in socket part (1) by their engaging in an annular groove associated with the plug-in socket part.

15. A plug-in connection device according to claim 14, characterised in that two corrugated spring rings (21) are inserted between each two successive retaining rings (20), which spring rings hold the rings (4, 6) of the associated contact ring group (3) disposed between them in mutual contact and in contact with the plug-in pin part (2) via the tapered contact face (8, 9).

16. A plug-in connection device according to any one of the preceding claims, characterised in that a spring ring (22), which acts on the socket inner contact ring (6) radially in the direction of the surface of the plug-in pin part (2), is associated with each socket inner contact ring.

17. A plug-in connection device according to claim 16, characterised in that the spring ring (22) is seated against the outside of the socket inner contact ring (6) (Figure 4).

18. A plug-in connection device according to claim 16, characterised in that the socket inner contact ring (6) has a slot (23) parallel to its axis and open towards its face for receiving the spring ring (22) (Figure 9).

## Revendications

1. Dispositif connecteur à fiches, de couplage, à courants élevés, refroidi par eau notamment pour installations de soudage automatisé, comportant un élément borne enfichable (1) et entrant en prise dans ce dernier, un élément fiche (2), qui sont le cas échéant rotatifs l'un par rapport à l'autre, caractérisé en ce que, dans l'élément borne enfichable (1), plusieurs groupes de bagues de contact (3) sont placés axialement l'un à la suite de l'autre, chacun de ceux-ci comportant au moins une borne-bague de contact extérieure fendue (4) présentant une surface de contact (5) venant élastiquement au contact contre la surface intérieure de l'élément borne enfichable (1), ainsi qu'au moins une borne-bague de contact intérieure fendue (6) présentant une surface de contact (7) venant, à l'état enfiché, élastiquement au contact contre l'élément fiche (2) et en ce que la borne-bague de contact extérieure (4) et la borne-bague de contact intérieure (6) de chaque groupe de bagues de contact (3) présentent des surfaces de contact coniques (8,8';9) s'accordant mutuellement.

2. Dispositif selon la revendication 1, caractérisé en ce qu'un élément ressort (21) au moins est associé aux groupes de bagues de contact (3) placés dans l'élément borne enfichable (1), élément ressort qui, à l'état enfiché, charge les bagues de contact (4,6) de chaque groupe (3) dans le sens d'un contact élastique de leurs surfaces de contact coniques (8,8'; 9).

3. Dispositif selon l'une des revendications 1 ou 2, caractérisé en ce que, dans l'élément borne enfichable (1), il est prévu un épaulement de bornes (10), formé par une réduction de diamètre, limitant la mobilité axiale des groupes de bagues de contact (3).

4. Dispositif selon l'une des revendications 1 à 3, dans lequel, en service, il se produit une rotation relative de l'élément fiche (2) par rapport à l'élément borne enfichable (1), caractérisé en ce que l'on utilise des bornes-bagues de contact intérieures (6), réalisées concordantes, qui viennent au contact de l'élément fiche (2) de forme cylindrique (figure 1).

5. Dispositif selon l'une des revendications 1 à 3, destiné à l'emploi pour des fréquences élevées de connexion, caractérisé en ce que, à l'élément fiche (2), sont associés des groupes de bagues de contact (3) comportant une succession de bornes-bagues de contact intérieures (6), dont les diamètres internes sont différents et sont accordés respectivement au diamètre externe de l'étage associé (13) de 1' élément fiche (2) étagé en gradins (figure 2).

6. Dispositif selon l'une des revendications 1 à 3, destiné à l'emploi pour des fréquences élevées de connexion et avec des forces de connexion très faibles, caractérisé en ce que l'élément fiche (2) est réalisé tronconique et que lui est associé une série de bornes-bagues de contact intérieures (6) comportant des diamètres internes différents, qui sont accordés au diamètre extérieur conique de l'élément fiche (figure 3).

7. Dispositif selon l'une des revendications 3 à 6, caractérisé en ce que l'élément fiche (2) comporte, faisant saillie au-delà de sa zone de surface de contact, une zone de guidage cylindrique (15), qui est accordée à un évidement correspondant (16) se raccordant à l'épaulement de bornes (10) dans l'élément borne enfichable.

8. Dispositif selon l'une des revendications 1 à 7, caractérisé en ce que, pour garantir la position des groupes de bagues de contact (3), il est prévu dans l'élément borne enfichable (1) un jonc (11) au moins, qui est fixé dans une rainure circulaire (12) de l'élément borne enfichable (1).

9. Dispositif selon l'une des revendications 1 à 8, caractérisé en ce que la borne-bague de contact extérieure (4) des groupes de bagues de contact (3) est respectivement formée d'un ruban en tôle (24) comportant des lames (25) découpées enbordure dirigées vers le bord du ruban, lesquelles sont pliées et légèrement coudées hors du plan de la bague de contact et contre lesquelles la borne-bague de contact intérieure (6) s'appuie par ses surfaces de contact coniques correspondantes (8,8').

10. Dispositif selon la revendication 9, caractérisé en ce que les lames (25) sont respectivement découpées et coudées alternativement de part et d'autre du bord du ruban, en ce que la borne-bague de contact intérieure (6) comporte respectivement deux surfaces de contact coniques (8,8') et en ce que les lames coudées (-25) s'appuient en faisant ressort sur les deux surfaces de contact coniques (8,8') de la borne-bague de contact intérieure (6).

11. Dispositif selon l'une des revendications 1 à 10, caractérisé en ce que chaque groupe de bagues de contact(3) comporte une borne-bague de contact intérieure fendue (6) et deux bornes-bagues de contact extérieures fendues (4), qui sont, par leurs surfaces de contact coniques (9), en contact avec les surfaces coniques correspondantes (8) de la borne-bague de contact intérieure (6).

12. Dispositif selon la revendication 11, caractérisé en ce que, à chaque groupe de bagues de contact (3), est associé au moins un ressort (21) le chargeant axialement et le maintenant en contact réciproque par ses surfaces de contact coniques (8,9).

13. Dispositif selon la revendication 12, caractérisé en ce que le ressort est formé d'une bague ressort ondulée (21).

14. Dispositif selon la revendication 13, caractérisé en ce que les bagues de chaque groupe de bagues de contact (3) sont fixées sous insertion du ressort (21) respectivement entre deux joncs (20), qui, de leur côté, sont fixés à leur emplacement dans l'élément borne enfichable (1) en venant en prise dans une rainure annulaire, qui leur est associée.

15. Dispositif selon la revendication 14, caractérisé en ce qu'entre deux joncs (20) successifs, sont respectivement insérées deux bagues ressorts ondulées (21), qui maintiennent en contact réciproque les bagues (4,6) du groupe de bagues de contact (3) correspondant placées entre elles et celles-ci au contact de l'élément fiche (2) par l'intermédiaire des surfaces de contact coniques (8,9).

16. Dispositif selon l'une des revendications précédentes, caractérisé en ce qu'à chaque borne-bague de contact intérieure (6) est associée une bague ressort (22) la chargeant radialement vers la surface de l'élément fiche (2).

17. Dispositif selon la revendication 16, caractérisé en ce que la bague ressort (22) vient au contact de la face externe de la borne-bague de contact intérieure (6) (figure 4).

18. Dispositif selon la revendication 16, caractérisé en ce que la borne-bague de contact intérieure (6) présente une rainure (23), ouverte sur le côté, parallèle à l'axe, pour le logement de la bague ressort (22) (figure 9).
